# EUROPEAN PATENT APPLICATION

(11) **EP 3 193 000 A1**
(43) Date of publication of application: **19.07.2017**
(21) Application number: 17150484.8
(22) Date of filing: 05.01.2017
(51) Int. Cl.: F02K 1/60, F02K 1/62, F02K 1/72

(54) **TRANSLATING COWL THRUST REVERSER HAVING A PRESSURE IMBALANCE THAT REDUCES OVERALL STRUCTURAL LOAD**

(30) Priority: 18.01.2016 US 201614997611
(71) Applicant: Honeywell International Inc., Morris Plains, NJ 07950 (US)
(72) Inventor: SMITH, Danis Burton, Morris Plains, NJ 07950 (US); ROMANO, Robert, Morris Plains, NJ 07950 (US); PEARSON, John Taylor, Morris Plains, NJ 07950 (US); ANDERSON, Morris, Morris Plains, NJ 07950 (US); NERI, Remo, Morris Plains, NJ 07950 (US)
(74) Representative: Houghton, Mark Phillip

(57) **Abstract**

A thrust reverser system for a turbine engine includes a support structure, a transcowl, and a door. The transcowl is mounted on the support structure and is axially translatable, relative to the support structure, between first and second positions. The door is pivotally coupled to the support structure and is rotatable, about a pivot axis, between stowed and deployed positions when the transcowl translates between the first and second positions, respectively. The door has an internal surface and a balance plane, and pressure forces acting along the balance plane effectively creates no moment about the pivot axis. The internal surface of the door has a first surface area forward of the balance plane and a second surface area aft of the balance plane, and the second surface area substantially exceeds the first surface area.

## Description

### TECHNICAL FIELD

The present invention relates to a thrust reverser system for a turbine engine, and more particularly to a translating cowl thrust reverser system having a pressure imbalance that reduces overall structural load.

### BACKGROUND

When turbine-powered aircraft land, the wheel brakes and the imposed aerodynamic drag loads (e.g., flaps, spoilers, etc.) of the aircraft may not be sufficient to achieve the desired stopping distance. Thus, engines on most turbine-powered aircraft include thrust reversers. Thrust reversers enhance the stopping power of the aircraft by redirecting the turbine engine exhaust airflow in order to generate reverse thrust. When stowed, the thrust reverser typically forms a portion of the engine nacelle and forward thrust nozzle. When deployed, the thrust reverser typically redirects at least a portion of the airflow (from the fan and/or engine exhaust) forward and radially outward, to help decelerate the aircraft.

Various thrust reverser designs are commonly known, and the particular design utilized depends, at least in part, on the engine manufacturer, the engine configuration, and the propulsion technology being used. Thrust reverser designs used most prominently with turbofan engines fall into two general categories: (1) fan flow thrust reversers, and (2) mixed flow thrust reversers. Fan flow thrust reversers affect only the bypass airflow discharged from the engine fan. Whereas, mixed flow thrust reversers affect both the fan airflow and the airflow discharged from the engine core (core airflow).

Fan flow thrust reversers are typically used on relatively high-bypass ratio turbofan engines. Fan flow thrust reversers include so-called "Cascade-type" or "Translating Cowl-type" thrust reversers. Fan flow thrust reversers are generally positioned circumferentially around the engine core aft of the engine fan and, when deployed, redirect fan bypass airflow through a plurality of cascade vanes disposed within an aperture of a reverse flow path. Typically, fan flow thrust reverser designs include one or more translating sleeves or cowls ("transcowls") that, when deployed, open an aperture, expose cascade vanes, and create a reverse flow path. Fan flow reversers may also include so-called pivot doors or blocker doors which, when deployed, rotate to block the forward-thrust flow path.

In contrast, mixed-flow thrust reversers are typically used with relatively low-bypass ratio turbofan engines. Mixed flow thrust reversers typically include so-called "Target-type," "Bucket-type," and "Clamshell Door-type" thrust reversers. These types of thrust reversers typically use two or more pivoting doors that rotate, simultaneously, opening a reverse flow path through an aperture and blocking the forward-thrust flow path. However, a transcowl-type thrust reverser could also be configured for use in a mixed flow application. Regardless of type, mixed flow thrust reversers are necessarily located aft or downstream of the engine fan and core, and often form the aft part of the engine nacelle.

Transcowl-type thrust reversers transition from the forward thrust state to the reverse thrust state by translating the transcowl aft so as to open a reverse thrust aperture, and simultaneously rotating a set of doors so as to obstruct the forward thrust nozzle. Transcowl translation is typically achieved via one or more actuators that supply an actuation force to the transcowl. The coordinated motion between the transcowl and the doors is typically achieved by the use of a linkage rod arrangement, which connects the doors to the transcowl so that translational motion of the transcowl causes rotational motion of the doors.

The size, cost, and weight of the actuators, and concomitantly the structure supporting the actuators, may depend, at least in part, on the magnitude of the actuation force required for the transcowl. As with many aircraft installed systems, there is an ongoing need to reduce the weight of thrust reverser systems. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a thrust reverser system for a turbine engine includes a support structure, a transcowl, and a door. The support structure is configured to be mounted to the engine. The transcowl is mounted on the support structure and is axially translatable, relative to the support structure, between a first position, in which the transcowl abuts the support structure, and a second position, in which the transcowl is displaced from the support structure to form an aperture between the transcowl and the support structure. The door is pivotally coupled to the support structure and is rotatable, about a pivot axis, between a stowed position and a deployed position when the transcowl translates between the first position and the second position, respectively. The door is configured, when it is in the deployed position, to redirect engine airflow through the aperture to thereby generate reverse thrust. The door has an internal surface and a balance plane, and the balance plane is parallel with and passes through the pivot axis and is substantially perpendicular to the internal surface. Pressure forces acting along the balance plane effectively create no moment about the pivot axis. The internal surface of the door has a first surface area forward of the balance plane and a second surface area aft of the balance plane, and the second surface area substantially exceeds the first surface area.

In another embodiment, a thrust reverser system for a turbine engine includes a support structure, a transcowl, and a plurality of pivot doors. The support structure is configured to be mounted to the engine. The transcowl is mounted on the support structure and has an inner surface. The transcowl is axially translatable, relative to the support structure, between a first position, in which the transcowl abuts the support structure, and a second position, in which the transcowl is displaced from the support structure to form an aperture between the transcowl and the support structure. The doors are pivotally coupled to the support structure, and each door has a forward edge and an aft edge. Each door is rotatable between a stowed position and a deployed position when the transcowl translates between the first position and the second position, respectively, and each door is configured, when it is in the deployed position, to redirect engine airflow through the aperture to thereby generate reverse thrust. Each door has an internal surface and a balance plane, and the balance plane of each door is parallel with and passes through its associated pivot axis and is substantially perpendicular to the internal surface of its associated door. For each door: pressure forces acting along the balance plane effectively create no moment about the pivot axis, the internal surface of the door has a first surface area forward of the balance plane and a second surface area aft of the balance plane, and the second surface area substantially exceeds the first surface area.

In yet another embodiment, a turbofan or turbojet engine includes a gas turbine engine and a nacelle. The nacelle is coupled to and at least partially surrounds the gas turbine engine. The nacelle comprises a thrust reverser system that includes a support structure, a transcowl, and a plurality of pivot doors. The support structure is coupled to the gas turbine engine. The transcowl is mounted to the support structure and has an inner surface. The transcowl is axially translatable, relative to the support structure, between a first position, in which the transcowl abuts the support structure, and a second position, in which the transcowl is displaced from the support structure to form an aperture between the transcowl and the support structure. The doors are pivotally coupled to the support structure, and each door has a forward edge and an aft edge. Each door is rotatable between a stowed position and a deployed position when the transcowl translates between the first position and the second position, respectively, and each door is configured, when it is in the deployed position, to redirect engine airflow through the aperture to thereby generate reverse thrust. Each door has an internal surface and a balance plane, and the balance plane of each door is parallel with and passes through its associated pivot axis and is substantially perpendicular to the internal surface of its associated door. For each door: pressure forces acting along the balance plane effectively create no moment about the pivot axis, the internal surface of the door has a first surface area forward of the balance plane and a second surface area aft of the balance plane, and the second surface area substantially exceeds the first surface area.

Furthermore, other desirable features and characteristics of the thrust reverser system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIGS. 1 and 2 depict a turbofan engine equipped with a mixed flow thrust reverser system, and with the thrust reverser system in a stowed position and deployed position, respectively;
FIGS. 3 and 4 depict a turbofan engine equipped with a fan flow thrust reverser system, and with the thrust reverser system in a stowed position and deployed position, respectively;
FIG. 5 depicts a cross-section view of a portion of one embodiment of a thrust reverser system that may be implemented in the turbofan engines of FIGS. 1-4, with the thrust reverser system in a stowed configuration; and
FIG. 6 depicts a cross-section view of a portion of one embodiment of a thrust reverser system that may be implemented in the turbofan engines of FIGS. 1-4, with the thrust reverser system in a deployed configuration.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

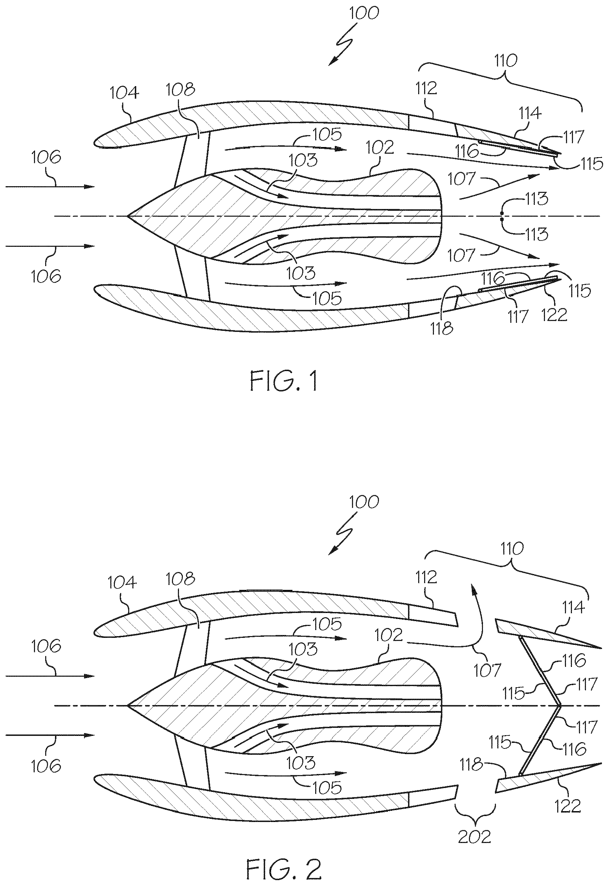

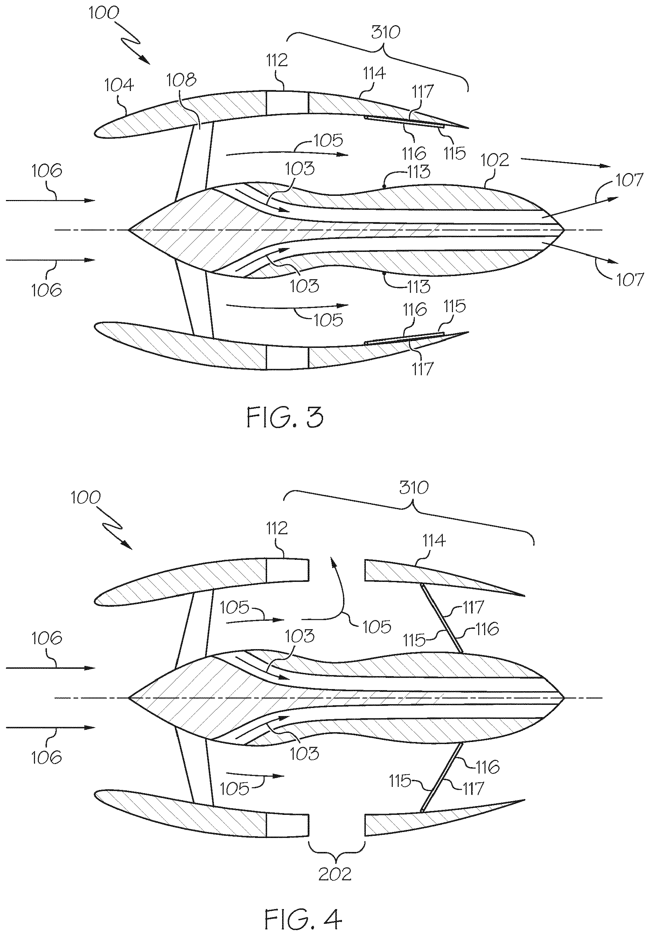

A turbofan engine is a component of an aircraft's propulsion system that typically generates thrust by means of an accelerating mass of gas. Simplified cross-section views of a traditional aircraft turbofan engine 100 are depicted in FIGS. 1-4. In particular, FIGS. 1 and 2 depict the engine 100 equipped with a mixed flow thrust reverser system, and with the thrust reverser system in a stowed position and deployed position, respectively, and FIGS. 3 and 4 depict the engine 100 equipped with a fan flow thrust reverser system, and with the thrust reverser system in a stowed position and deployed position, respectively.

Referring first to FIGS. 1 and 2, the turbofan engine 100 includes a gas turbine engine 102 that is encased within an aerodynamically smooth outer covering, generally referred to as the nacelle 104. Ambient air 106 is drawn into the nacelle 104 via a rotationally mounted fan 108 to thereby supply engine airflow. A portion of the engine airflow is drawn into the gas turbine engine 102, where it is pressurized, and mixed with fuel and ignited, to generate hot gasses known as core flow 103. The remainder of engine airflow bypasses the gas turbine engine 102 and is known as fan flow 105. The core flow 103 and the fan flow 105 mix downstream of the gas turbine engine 102 to become the engine exhaust flow 107, which is discharged from the turbofan engine 100 to generate forward thrust.

The nacelle 104 comprises a mixed flow thrust reverser system 110. The thrust reverser system 110 includes a stationary structure 112, an annular translatable cowl, or transcowl 114, and one or more doors 116 (two in the depicted embodiment). The transcowl 114 is mounted on the support structure 112 and has an inner surface 118 and an outer surface 122. The transcowl 114 is axially translatable, relative to the support structure 112, between a first position, which is the position depicted in FIG. 1, and a second position, which is the position depicted in FIG. 2. In the first position the transcowl 114 abuts the support structure 112, and in the second position the transcowl 114 is displaced from the support structure 112 to form an aperture 202 between the transcowl 114 and the support structure 112.

Each of the one or more doors 116 includes an inner surface 115 and an outer surface 117, and is pivotally coupled to the support structure 112. Each door 116 is rotatable, about a pivot axis 113, between a stowed position, which is the position depicted in FIG. 1, and a deployed position, which is the position depicted in FIG. 2. More specifically, each door 116 is rotatable, about the pivot axis 113, between the stowed position and the deployed position when the transcowl 114 translates between the first position and the second position, respectively. As is generally known, each door 116 is configured, when it is in the deployed position, to redirect at least a portion of the engine airflow through the aperture 202. In particular, at least a portion of the engine exhaust flow 107 (e.g., mixed core flow 103 and fan flow 105) is redirected through the aperture 202.

Referring now to FIGS. 3 and 4, the turbofan engine 100 equipped with a fan flow thrust reverser system 310 will be briefly described. Before doing so, however, it is noted that like reference numerals in FIGS. 1-4 refer to like parts, and that descriptions of the like parts of the depicted turbofan engines 100 will not be repeated. The notable differences between the turbofan engine 100 depicted in FIGS. 3 and 4 is that the fan flow thrust reverser system 310 is positioned further upstream than that of the mixed flow thrust reverser system 110 depicted in FIGS. 1 and 2.

As with the mixed flow thrust reverser system 110, the depicted fan flow thrust reverser system 310 includes the stationary structure 112, the transcowl 114, and the one or more doors 116 (again, two in the depicted embodiment). Moreover, each door 116 is rotatable, about the pivot axis 113, between a stowed position, which is the position depicted in FIG. 3, and a deployed position, which is the position depicted in FIG. 4. Similarly, each door 116 is rotatable, about the pivot axis 113, between the stowed position and the deployed position when the transcowl 114 translates between the first position and the second position, respectively. As is generally known, each door 116 is configured, when it is in the deployed position, to redirect at least a portion of the engine airflow through the aperture 202 to thereby generate reverse thrust. In this case, however, only fan flow 105 is redirected through the aperture 202.

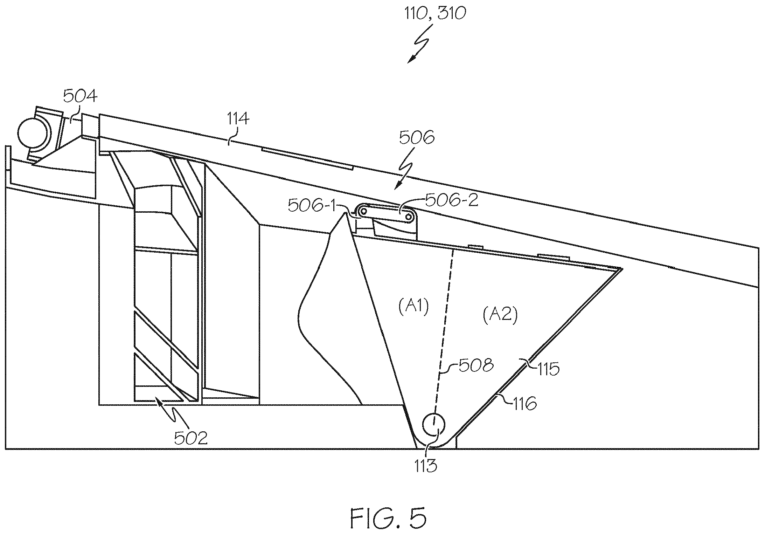

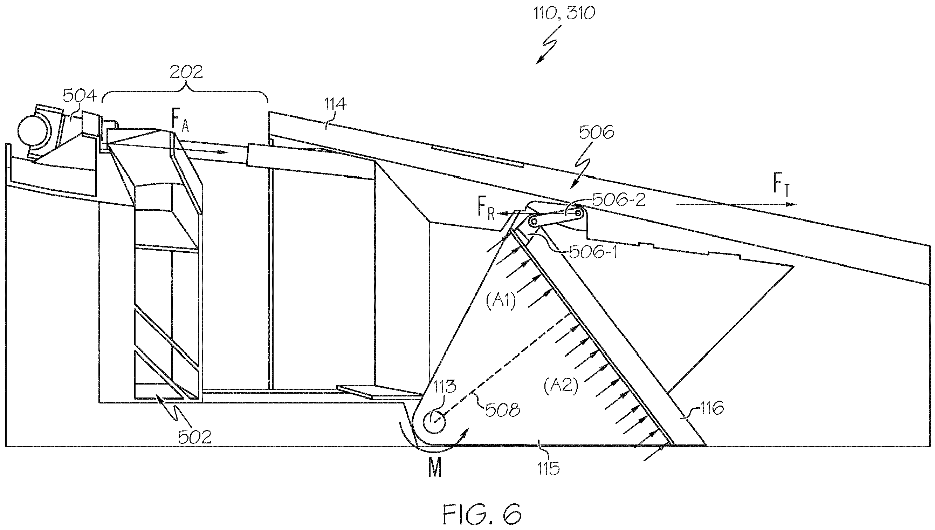

Turning now to FIGS. 5 and 6, it is noted that regardless of which of the above-described thrust reverser systems 110, 310 is implemented in the turbofan engine 100, both systems 110, 310, at least in the depicted embodiment, additionally include a plurality of vanes 502 and a plurality of actuators 504 (only one depicted). The vanes 502 may, in some embodiments, be arranged in a plurality of rows and columns, in the form of a cascade. As such, the vanes 502 may be referred to as "cascade vanes." The vanes 502 are preferably disposed within the aperture 202 such that when the transcowl 114 is in the first position (FIG. 5), the vanes 502 are covered by the transcowl 114, and when the transcowl 114 is in the second position (FIG. 6), the transcowl 114 exposes the cascade vanes 502.

The actuators 504 are coupled to the support structure 112 and the transcowl 114, and are configured to supply an actuation force to the transcowl 114. It will be appreciated that the actuators 504 may be implemented using any one of numerous types of electric, hydraulic, or pneumatic actuators. Regardless of the type of actuators 504 that are used, each is responsive to commands from non-illustrated systems to supply an actuation force to the transcowl 114 to move the transcowl 114 between the first position (FIG. 5) the second position (FIG. 6).

As noted above, each door 116 is rotatable, about the pivot axis 113, between the stowed position and the deployed position when the transcowl 114 translates between the first position and the second position, respectively. To implement this functionality, each of the thrust reverser systems 110, 310 additionally include a linkage assembly 506 that is coupled to, and is configured to transmit force between, the transcowl 114 and the doors 116. The linkage assembly 506 is implemented using a plurality of link elements 506-1, 506-2 so as to achieve the necessary motion and transmit the necessary force between the door 116 and the transcowl 114. Preferably, the thrust reverser system includes a plurality of linkage assemblies 506 such that if one linkage assembly were unable to transmit the necessary force, the remaining linkage assembly(ies) would still transmit the force. It will be appreciated that although the linkage assembly 506 is depicted as being implemented with two link elements 506-1, 506-2, it could additionally be implemented using more or fewer link elements.

No matter the number of link elements that are used to implement the linkage assembly 506, for each door 116 there exists an imaginary balance plane 508. The balance plane 508 is parallel with and passes through the pivot axis 113 and is substantially perpendicular to the internal surface 115 of its associated door 116. As used herein, the term "balance plane" means a plane that is disposed such that the pressure forces acting along the balance plane 508 will effectively create no moment about the pivot axis 113. As FIGS. 5 and 6 also depict, the internal surface 115 of each door 116 has a first surface area (A₁) forward of the balance plane 508 and a second surface area (A₂) aft of the balance plane. As depicted, the second surface area substantially exceeds the first surface area (i.e., A₂ > A₁).

With the configuration described above, and as FIG. 6 more clearly depicts, the pressure forces acting on the doors 116, at least when the doors 116 are in the deployed position, generate a moment (M) about the pivot axis 113. As a result, a reaction force (F_{R}) is transmitted, via the linkage 506, to the transcowl 114. This reaction force (F_{R}) will have an axial force component opposite to the axial force component (F_{T}) on the transcowl 114 resulting from pressure forces thereon. As a result, the net axial force (F_{NET}) acting on the transcowl. 114 is reduced, and so the force that must be reacted by the actuators and associated structure (F_{A}) is reduced. In some embodiments, the magnitude of the reaction force (F_{R}) may be such that, in the absence of an actuation force (F_{A}) from the actuators 504, the transcowl 114 will move toward the first position.

By reducing the net axial force acting on the transcowl 114, the loads reacted by the actuators 504 and the associated portions of the support structure 112 are reduced. As a result, less structural reinforcement is needed, thereby providing cost and weight savings.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A thrust reverser system for a turbine engine, comprising:
a support structure configured to be mounted to the engine;
a transcowl mounted on the support structure and axially translatable, relative to the support structure, between a first position, in which the transcowl abuts the support structure, and a second position, in which the transcowl is displaced from the support structure to form an aperture between the transcowl and the support structure; and
a door pivotally coupled to the support structure and rotatable, about a pivot axis, between a stowed position and a deployed position when the transcowl translates between the first position and the second position, respectively, the door configured, when it is in the deployed position, to redirect engine airflow through the aperture to thereby generate reverse thrust, the door having an internal surface and a balance plane, the balance plane parallel with and passing through the pivot axis and substantially perpendicular to the internal surface,
wherein:
pressure forces acting along the balance plane effectively create no moment about the pivot axis,
the internal surface of the door has a first surface area forward of the balance plane and a second surface area aft of the balance plane, and
the second surface area substantially exceeds the first surface area.

2. The thrust reverser system of claim 1, further comprising:
at least one linkage assembly coupled to, and configured to transmit force between, the door and the transcowl.

3. The thrust reverser system of claim 2, wherein
at least when the door is in the deployed position, pressure force exerted on the internal surface will generate a moment about the pivot axis, whereby a reaction force is transmitted, via the linkage, to the transcowl.

4. The thrust reverser system of claim 3, further comprising:
an actuator coupled to the support structure and the transcowl and configured to supply an actuation force to move the transcowl between the first position and the second position.

5. The thrust reverser system of claim 4, wherein:
the reaction force transmitted to the transcowl has a magnitude that, when combined with the other forces acting on the transcowl, results in a net reduction in force reacted by the actuator and its associated structure.

6. The thrust reverser system of claim 4, wherein:
the reaction force transmitted to the transcowl has a magnitude such that, in the absence of the actuation force, the transcowl will move toward the first position.

7. The thrust reverser system of claim 2, further comprising a plurality of linkage assemblies coupled to the at least one door.
